# DEMANDE DE BREVET EUROPEEN

(11) **EP 1 854 347 A1**
(43) Date de publication de la demande: **14.11.2007**
(21) Numéro de dépôt: 07301022.5
(22) Date de dépôt: 09.05.2007
(51) Int. Cl.: A01G 17/06

(54) **Ecarteur pour le relevage de la vigne**

(30) Priorité: 12.05.2006 FR 0651721; 26.05.2006 FR 0651919; 13.10.2006 FR 0654270
(71) Demandeur: SCDC, Société Anonyme, 51270 Orbais L'Abbaye (FR)
(72) Inventeur: Casters, Denis, F-51270, Mareuil-en-Brie (FR)
(74) Mandataire: Rhein, Alain

(57) **Abrégé**

L'invention concerne un écarteur (4) pour le relevage de la vigne et comportant au moins une branche (5; 5') présentant deux extrémités (6, 7; 6', 7') dont une première extrémité (6; 6') comportant un moyen (8; 8') pour la réception d'un fil de relevage (1; 1') et une seconde extrémité (7; 7') comportant un moyen (9) pour son association à un piquet de vigne (3) ou à un fil de palissage fixe.

Cet écarteur (4) est caractérisé par le fait qu'il comporte au moins un moyen (14; 14') pour assurer et maintenir une orientation déterminée d'une branche (5; 5') de l'écarteur (4) par rapport au fil de relevage (1; 1') auquel une telle branche (5; 5') est associée.

## Description

La présente invention a trait à un écarteur pour le relevage de la vigne.

Cette invention concerne le domaine de la fabrication des accessoires pour le traitement et la culture de la végétation et trouvera une application toute particulière lorsqu'il s'agit de procéder au relevage d'une vigne.

Lors de la croissance des sarments d'une telle vigne et du développement de la végétation, il arrive un moment où il est nécessaire de procéder au relevage de cette vigne.

Pour ce faire, il est connu de faire appel à des fils de palissage s'étendant, de manière parallèle, le long d'une rangée de pieds de vigne et dont certains au moins, dits fils de relevage, sont susceptibles d'être relevés pour adopter une position de relevage dans laquelle il sont, usuellement, maintenus.

En fait, de tels fils de relevage sont, usuellement, groupés par paire et s'étendent de part et d'autre d'une telle rangée de pieds de vigne, voire de part et d'autre d'une rangée de piquets de vigne ou encore de part et d'autre d'un autre fil de palissage.

On observera qu'au moins un tel fil de relevage est rendu solidaire, selon le mode de réalisation considéré, d'un fil de palissage ou d'un piquet de vigne par l'intermédiaire d'un écarteur comportant au moins une branche susceptible d'adopter au moins deux positions dont une première position (dite position ouverte) dans laquelle une telle branche s'étend de manière sensiblement horizontale ou en adoptant un angle réduit par rapport à cette horizontale, par exemple de manière sensiblement latérale par rapport à un piquet de vigne. Une telle branche est, également, susceptible d'adopter une seconde position (dite de relevage) dans laquelle une telle branche s'étend de manière sensiblement verticale, par exemple de manière sensiblement longitudinale par rapport à un piquet de vigne.

Aussi et lors d'une opération de relevage de la vigne, l'on procède, usuellement de manière manuelle ou automatisée, au relevage des fils de relevage ce qui permet d'amener la ou les branches d'un écarteur de la première position (ouverte) vers la seconde position (de relevage) ayant pour effet de rapprocher l'extrémité libre d'une branche d'un écarteur associée à un fil de relevage, selon le cas, d'un autre fil de relevage et/ou de l'extrémité libre de l'autre branche de cet écarteur associée à cet autre fil de relevage.

C'est, plus particulièrement, dans cette position de relevage que les fils de relevage sont maintenus, notamment par le biais d'un moyen pour réaliser l'accrochage entre les deux fils de palissage (agrafe ou analogue) ou entre une branche d'écarteur associée à un des fils de relevage et l'autre fil de relevage (crochet ou analogue équipant ladite branche de l'écarteur).

Ainsi et après une opération de relevage, la ou les branches d'un écarteur adoptent une position sensiblement verticale dans laquelle les fils de relevage adoptent la position la plus élevée possible par rapport au sol correspondant à celle permettant le développement et/ou le traitement le plus efficace de la vigne.

Il convient, cependant, d'observer que, sous l'effet du poids de la végétation et/ou des conditions météorologiques, les fils de relevage exercent une pression descendante sur les écarteurs qui, de ce fait, ont tendance à se déplacer axialement par rapport aux fils de relevage et, par conséquent, à basculer en s'écartant de leur position verticale pour se coucher, notamment en s'éloignant du piquet de vigne sur lequel est fixé un tel écarteur. Par un tel basculement, les fils de relevage s'abaissent entraînant avec eux la végétation qui s'affaisse, un tel affaissement pouvant aller jusqu'à ce que ces fils de relevage atteignent leur position d'avant le relevage.

La présente invention se veut à même de remédier aux inconvénients des écarteurs de l'état de la technique en proposant un nouvel écarteur présentant des caractéristiques qui lui permettent d'éviter un basculement hors de sa position de relevage.

A cet effet, l'invention concerne un écarteur pour le relevage de la vigne et comportant, d'une part, au moins une branche présentant deux extrémités dont une première extrémité comportant un moyen pour la réception d'un fil de relevage et une seconde extrémité comportant un moyen pour son association à un piquet de vigne ou à un fil de palissage fixe et, d'autre part, au moins un moyen pour assurer et maintenir une orientation déterminée d'une branche de l'écarteur par rapport au fil de relevage auquel une telle branche est associée. Cet écarteur est caractérisé par le fait que le moyen d'orientation est constitué par le moyen de réception qui adopte la forme d'une spirale dont l'axe s'étend, d'une part, avec une orientation déterminée par rapport à la branche de l'écarteur et, d'autre part, de manière parallèle au fil de relevage.

Encore une autre caractéristique concerne le fait que la spirale comporte des spires qui sont non jointives et qui présentent un espacement entre elles autorisant l'engagement, entre deux spires, d'un fil de relevage.

Une autre caractéristique est que l'enroulement de la spirale est orienté de manière à diverger par rapport au piquet de vigne, à un fil de palissage ou à un fil de relevage autre que celui associé à cette spirale.

En fait, la spirale se situe dans le prolongement de la première extrémité de la branche de l'écarteur et est réalisée par déformation, notamment par pliage, d'une portion de la première extrémité de la branche de l'écarteur.

Une autre caractéristique consiste en ce que l'écarteur comporte deux branches dont l'une au moins est équipée d'un moyen d'orientation et qui sont raccordées entre elles au niveau des secondes extrémités de ces branches, plus particulièrement par le biais d'au moins un moyen d'association.

Finalement, cet écarteur est réalisé à partir d'un unique fil métallique, notamment par déformation, plus particulièrement par pliage, d'un tel fil.

Les avantages de l'écarteur conforme à l'invention consistent en ce qu'il comporte des moyens qui permettent de conférer une orientation déterminée à la branche de cet écarteur par rapport à un fil de relevage par le simple fait d'assurer un montage de cet écarteur sur un tel fil.

De manière avantageuse, ces moyens permettent de maintenir une telle orientation quelles que soient les contraintes exercées sur les fils de relevage et, par conséquent, sur l'écarteur.

Les fils de relevage et, par conséquent, la végétation de la vigne, demeurent dans leur position de relevage dans laquelle ils ont été amenés au cours d'une opération de relevage.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée d'un écarteur comportant une seule branche et correspondant à un premier mode de réalisation de l'invention;
- la figure 2 est une vue schématisée d'un écarteur comportant deux branches, associé à un fil de palissage fixe, et correspondant à un deuxième mode de réalisation de l'invention;
- la figure 3 est une vue schématisée correspondant à l'écarteur illustré figure 2 et rendu solidaire d'un piquet de vigne ;
- la figure 4 est une vue schématisée d'un écarteur correspondant à un troisième mode de réalisation de l'invention.

La présente invention concerne le domaine de la fabrication des accessoires pour le traitement et la culture de la végétation, plus particulièrement constituée par de la vigne.

Cette invention trouvera une application particulièrement appropriée lorsqu'il s'agit de procéder au relevage d'une telle végétation.

A ce propos, il convient d'observer que si, dans la suite de la description, il sera, essentiellement, fait référence au domaine de la vigne, la présente invention n'y est aucunement limitée et trouvera une application pour toutes les formes de végétation nécessitant une opération de relevage.

En fait, une telle vigne comporte, d'une part, une pluralité de pieds de vigne disposés selon une pluralité de rangées et, d'autre part, des fils de palissage 1, 1', 2 s'étendant, de manière sensiblement parallèle, d'un bout à l'autre d'une telle rangée de pieds de vigne.

A ce propos, on observera que ces fils de palissage 1, 1', 2 sont, au moins en partie, constitués par des fils de relevage 1, 1 ' disposés de part et d'autre des pieds de vigne. Ces fils de relevage 1, 1' sont destinés à adopter, d'une part, une première position (dite position basse) durant une première phase de croissance et de développement de la vigne et, d'autre part, une seconde position (dite position de relevage) durant une seconde phase de croissance et de développement de cette vigne. En fait, ces fils de relevage 1, 1' sont destinés à être amenés, au cours d'une opération de relevage de la vigne, de ladite position basse vers ladite position de relevage dans laquelle ces fils 1, 1' sont maintenus.

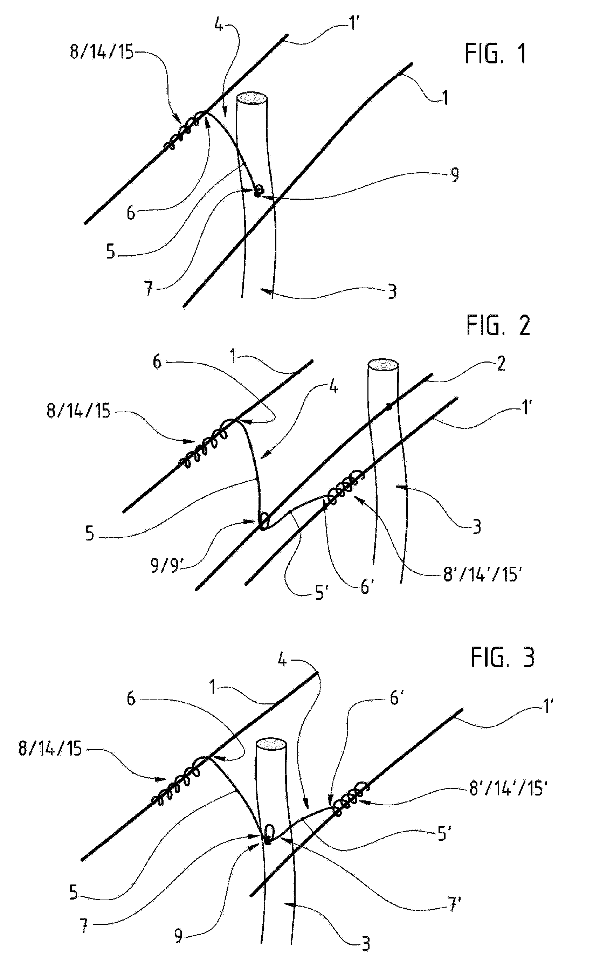

Selon un premier mode de réalisation illustré figure 2, ces fils de palissage 1, 1', 2 sont constitués, d'une part, par lesdits fils de relevage 1, 1' et, d'autre part, par au moins un fil de palissage fixe 2 par rapport auquel les fils de relevage 1, 1' sont relevés et qui est associé à une pluralité de piquets de vigne 3 interposés entre deux pieds de vigne successifs d'une même rangée.

Cependant et selon un autre mode de réalisation illustré figures 1, 3 et 4, les fils de palissage 1, 1' sont uniquement constitués par des fils de relevage 1, 1' disposés de part et d'autre d'une rangée de piquets de vigne 3.

A ce propos, il convient d'observer qu'un tel fil de relevage 1, l' est rendu solidaire, selon le cas, du fil de relevage fixe 2 (figure 2) ou d'un piquet de vigne 3 (figures 1, 3 et 4) par l'intermédiaire d'un écarteur 4 conçu pour assurer le relevage de la vigne.

De manière connue en soi, un tel écarteur 4 comporte au moins une branche 5; 5' présentant deux extrémités 6, 7; 6', 7' dont une première extrémité 6; 6' comportant un moyen 8; 8' pour la réception d'un fil de relevage 1; l' ainsi qu'une seconde extrémité 7; 7' comportant un moyen 9; 9' pour l'association d'un tel écarteur 4, selon le cas, à un fil de palissage fixe 2 (figure 2) ou à un piquet de vigne (figures 1, 3 et 4).

A ce propos, on observera que, selon un mode de réalisation particulier de l'invention, un tel écarteur 4 peut comporter une seule et unique branche 5, notamment comme visible figure 1.

Cependant et selon un mode de réalisation plus répandu, un tel écarteur 4 comporte usuellement deux branches 5; 5', d'une part, aptes à coopérer, chacune, avec un fil de relevage 1;1' différent et, d'autre part, raccordées entre elles au niveau des secondes extrémités 7; 7' de ces branches 5; 5', plus particulièrement par le biais d'au moins un moyen d'association 9; 9'.

A ce propos, on observera qu'un tel moyen d'association 9; 9' se situe, de préférence, dans le prolongement d'une telle seconde extrémité 7; 7' de branche 5; 5' et peut être constitué par une déformation d'une telle seconde extrémité 7; 7' de branche 5; 5'.

En fait et en ce qui concerne un tel moyen d'association 9, 9', celui-ci peut adopter la forme d'un moyen d'accrochage apte à coopérer avec un fil de palissage fixe 2 ou avec un piquet de vigne 3, voire encore avec un moyen d'accrochage complémentaire (notamment défini au niveau d'une embase ou analogue) équipant un tel piquet de vigne 3.

Cependant et selon un mode de réalisation préféré de l'invention, un tel moyen d'association 9; 9' adopte la forme d'une boucle équipant ou définie au niveau de la seconde extrémité 7; 7' d'une branche 1; 1' de l'écarteur 4.

Une telle boucle est conçue, selon le cas, pour le passage d'un fil de palissage fixe 2 (figure 2), pour la réception d'un organe de fixation de l'écarteur 4 sur un piquet de vigne 3 (figures 1, 3 et 4), voire encore pour être engagée autour d'un tel piquet de vigne 4.

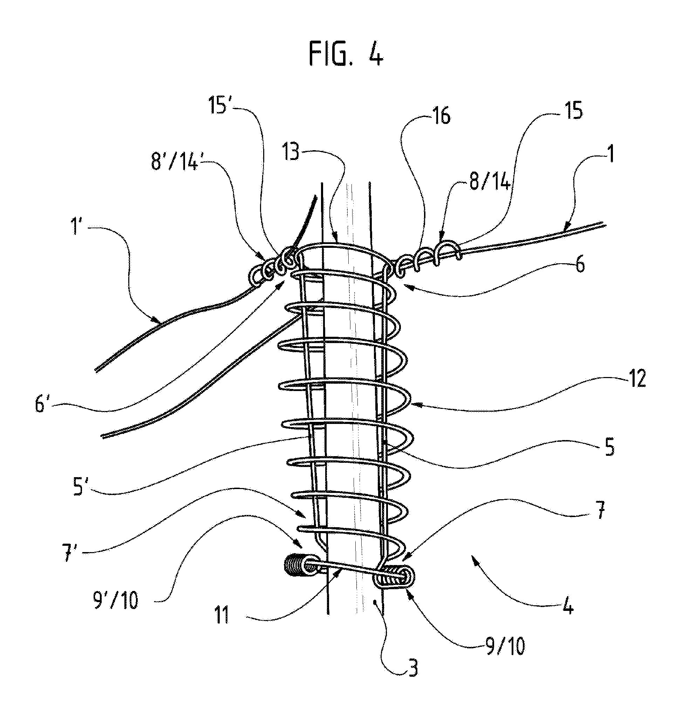

Finalement et selon un mode particulier de réalisation illustré figure 4, le moyen d'association 9 adopte la forme d'un moyen d'articulation 10 (notamment sous la forme d'une spirale, par exemple à spire jointives) d'une branche 5; 5' sur une spire 11 d'un ressort 12 rendu solidaire d'un piquet de vigne 4 et conçu pour faire adopter, de manière automatique (et par déploiement de ce ressort 12), à un moyen 13 de maintien d'une branche 5; 5' une position active de maintien d'une telle branche 5; 5' dans la position de relevage de l'écarteur 4.

A ce propos, on observera qu'un tel moyen d'association 9 (plus particulièrement sous la forme d'un moyen d'accrochage, d'une boucle ou d'un moyen d'articulation 10 du type susmentionné) se situe dans le prolongement de la seconde extrémité 7; 7' de la branche 5; 5' de l'écarteur 4 et est, de préférence, réalisé par déformation d'une portion de cette seconde extrémité 7; 7' de la branche 5; 5' de cet écarteur 4.

Selon l'invention, un tel écarteur 4 comporte au moins un moyen 14, 14' conçu pour assurer et maintenir une orientation déterminée d'une branche 5; 5' de cet écarteur 4 par rapport au fil de relevage 1; 1' auquel une telle branche 5; 5' est associée.

A ce propos, il convient d'observer que, dans le cas d'un écarteur 4 comportant une seule branche 5, cette dernière 5 comporte un tel moyen d'orientation 14 (figure 1).

Cependant et dans le cas d'un écarteur 4 comportant deux branches 5; 5', l'une au moins de ces deux branches 5; 5' (mais de préférence les deux branches 5; 5' comme visible figures 2 à 4) comportent un tel moyen d'orientation 14, 14'.

Dans le cas d'un écarteur 4 comportant deux moyens d'orientation 14; 14', associés, chacun, à un fil de relevage 1; 1', ces moyens d'orientation 14; 14' peuvent être orientés dans une même direction mais sont, de préférence, orientés dans des direction opposées (figures 2 à 4).

La présence d'un tel moyen d'orientation 14; 14' permet, avantageusement, de maintenir la branche 5; 5' dans une même direction par rapport au fil de relevage 1; 1', ceci quelle que soit la position (basse ou relevée) de la branche 5; 5' et/ou de l'écarteur 4. Un tel maintien évite le basculement d'une telle branche 5; 5' (et, par conséquent, de l'écarteur 4) par rapport au fil de relevage 1; 1', ceci dans la direction axiale d'extension d'un tel fil 1; 1' et, notamment, en s'éloignant du piquet 3, plus particulièrement sous le poids de la végétation.

A ce propos, on observera qu'une telle branche 5; 5' est, de préférence, orientée dans une direction sensiblement perpendiculaire à la direction axiale d'extension du fil de relevage 1; 1' y associé.

Tel que visible sur les figures en annexe, le moyen d'orientation 14; 14' est constitué par le moyen de réception 8; 8' d'un fil de palissage 1; 1', ce moyen de réception 8; 8' adoptant la forme d'une spirale 15; 15' dont l'axe s'étend, d'une part, avec une orientation déterminée (de préférence perpendiculaire) par rapport à la branche 5; 5' de l'écarteur 4 et, d'autre part, de manière parallèle au fil de relevage 1; 1' que reçoit ce moyen de réception 8; 8'.

Une autre caractéristique de l'invention consiste en ce que la spirale 15; 15' présente des spires 16 de diamètre sensiblement identique.

Une caractéristique additionnelle consiste en ce que les spires 16 sont non jointives et présentent un espacement entre elles 16 autorisant l'engagement, entre deux spires 16, d'un fil de relevage 1; 1', plus particulièrement pour la mise en place de l'écarteur 4 sur un tel fil 1; 1'.

Un tel espacement facilite considérablement l'introduction d'un fil de relevage 1; 1' à l'intérieur d'un moyen de réception 8; 8', plus particulièrement par rapport à des moyens de réception de l'état de l'art et constitués par une boucle ou analogue, notamment refermée sur elle-même.

On observera que l'enroulement de la spirale 15; 15' est orienté de manière à diverger par rapport au piquet de vigne 4, à un fil de palissage fixe 2 ou à un fil de relevage 1'; 1 autre que celui 1; 1' associé à cette spirale 15; 15', plus particulièrement en position de relevage de l'écarteur 4.

En fait et tel que visible sur les figures en annexe, la spirale 15, 15' se situe dans le prolongement de la première extrémité 6; 6' de la branche 5; 5' de l'écarteur 4.

De manière préférentielle, une telle spirale 15; 15' est réalisée par déformation, notamment par pliage, d'une portion de la première extrémité 6; 6' de la branche 5; 5' de l'écarteur 4.

Selon une autre caractéristique de l'invention, l'écarteur 4 est réalisé à partir d'un unique fil métallique, notamment par déformation, plus particulièrement par pliage, d'un tel fil.

A ce propos, on observera qu'un unique fil peut, alors, être employé pour la réalisation d'au moins une branche 5 (notamment pour la réalisation d'un écarteur 4 comportant une branche 5 unique), voire des deux branches 5; 5' d'un tel écarteur 4. Ce même fil peut, également, être déformé pour la réalisation d'au moins un moyen de réception 8; 8' et/ou d'au moins un moyen d'association 9; 9'.

## Revendications

1. Ecarteur (4) pour le relevage de la vigne et comportant, d'une part, au moins une branche (5; 5') présentant deux extrémités (6, 7; 6', 7') dont une première extrémité (6; 6') comportant un moyen (8; 8') pour la réception d'un fil de relevage (1; 1') et une seconde extrémité (7; 7') comportant un moyen (9; 9') pour son association à un piquet de vigne (3) ou à un fil de palissage fixe (2) et, d'autre part, au moins un moyen (14; 14') pour assurer et maintenir une orientation déterminée d'une branche (5; 5') de l'écarteur (4) par rapport au fil de relevage (1; 1') auquel une telle branche (5; 5') est associée, **caractérisé par le fait que** le moyen d'orientation (14; 14') est constitué par le moyen de réception (8; 8') qui adopte la forme d'une spirale (15; 15') dont l'axe s'étend, d'une part, avec une orientation déterminée par rapport à la branche (5; 5') de l'écarteur (4) et, d'autre part, de manière parallèle au fil de relevage (1;1').

2. Ecarteur (4) selon la revendication 1, **caractérisé par le fait que** la spirale (15; 15') présente des spires (16) de diamètre sensiblement identique.

3. Ecarteur (4) selon l'une quelconque des revendications précédentes, **caractérisé par le fait que** la spirale (15; 15') comporte des spires (16) qui sont non jointives et qui présentent un espacement entre elles autorisant l'engagement, entre deux spires (16), d'un fil de relevage (1; 1').

4. Ecarteur (4) selon l'une quelconque des revendications précédentes, **caractérisé par le fait que** l'enroulement de la spirale (15; 15') est orienté de manière à diverger par rapport au piquet de vigne (3), à un fil de palissage fixe (2) ou à un fil de relevage (1'; 1) autre que celui (1; 1') associé à cette spirale (15; 15').

5. Ecarteur (4) selon l'une quelconque des revendications précédentes, **caractérisé par le fait que** la spirale (15; 15') se situe dans le prolongement de la première extrémité (6; 6') de la branche (5; 5') de l'écarteur (4).

6. Ecarteur (4) selon l'une quelconque des revendications précédentes, **caractérisé par le fait que** la spirale (15; 15') est réalisée par déformation, notamment par pliage, d'une portion de la première extrémité (6; 6') de la branche (5; 5') de l'écarteur (4).

7. Ecarteur (4) selon l'une quelconque des revendications précédentes, **caractérisé par le fait que** le moyen d'association (9; 9') adopte la forme d'au moins une boucle, soit pour son engagement autour d'un piquet de vigne (3), soit pour la réception d'un organe de fixation de l'écarteur (4) sur un tel piquet de vigne (3) ou pour le passage d'un fil de palissage fixe (2).

8. Ecarteur (4) selon l'une quelconque des revendications précédentes, **caractérisé par le fait qu'**il comporte deux branches (5; 5') dont l'une au moins est équipée d'un moyen d'orientation (14; 14').

9. Ecarteur (4) selon l'une quelconque des revendications précédentes, **caractérisé par le fait qu'**il comporte deux branches (5; 5') équipées, chacune, d'un moyen d'orientation (14; 14') et en ce que ces moyens d'orientation (14; 14') sont orientés dans des directions opposées.

10. Ecarteur (4) selon l'une quelconque des revendications précédentes 9 ou 10, **caractérisé par le fait que** les deux branches (5; 5') sont raccordées entre elles au niveau des secondes extrémités (7; 7') de ces branches (5; 5'), plus particulièrement par le biais d'au moins un moyen d'association (9; 9') .

11. Ecarteur (4) selon l'une quelconque des revendications précédentes, **caractérisé par le fait qu'**il est réalisé à partir d'un unique fil métallique, notamment par déformation, plus particulièrement par pliage, d'un tel fil.
